# EUROPEAN PATENT APPLICATION

(11) **EP 4 105 007 A1**
(43) Date of publication of application: **21.12.2022**
(21) Application number: 21180235.0
(22) Date of filing: 18.06.2021
(51) Int. Cl.: B29C 70/52, B29D 99/00, F03D 1/06, B29C 70/08

(54) **METHOD FOR MANUFACTURING HIGH QUALITY HYBRID PULTRUSIONS**

(71) Applicant: LM Wind Power A/S, 6000 Kolding (DK)
(72) Inventor: BAVILOLIAIE, Mahdi, 6000 Kolding (DK); LILLEHEDEN, Lars, 6000 Kolding (DK); JESPERSEN, Klavs, 6000 Kolding (DK)
(74) Representative: COPA Copenhagen Patents

(57) **Abstract**

Method of manufacturing an elongated hybrid pultruded fibre reinforced composite element with a predetermined cross-sectional fibre pattern for a wind turbine blade part. The method comprises the steps of: providing fibre material, including a first plurality of fibres of a first fibre type and a second plurality of fibres of a second fibre type, wherein the first fibre type and second fibre type are different from each other; pulling the fibre material through a guiding element to arrange the first plurality of fibres and the second plurality of fibres in a pre-determined cross-sectional fibre pattern; pre-treating the fibre material by contacting the fibre material with a binding agent and pulling the fibre material through a first pultrusion die to form a plurality of pre-bonded fibre portions; passing the pre-bonded fibre portions through a resin bath to impregnate the pre-bonded fibre portions with resin; pulling the pre-bonded fibre portions through a second pultrusion die with a pre-determined cross-section to form a cured pultrusion string; and cutting the pultrusion string to obtain the hybrid pultruded fibre reinforced composite element with the predetermined cross-sectional fibre pattern comprising the plurality of fibres of the first fibre type and the plurality of the second fibre type.

## Description

### FIELD OF INVENTION

The present invention relates to a method of manufacturing an elongated hybrid pultruded fibre reinforced composite element with a predetermined cross-sectional fibre pattern for a wind turbine blade part. The present invention further relates to a method of manufacturing a wind turbine blade comprising such an elongated hybrid pultruded fibre reinforced composite element.

### BACKGROUND OF INVENTION

Wind power provides a clean and environmentally friendly source of energy. Wind turbines usually comprise a tower, generator, gearbox, nacelle, and one or more rotor blades. The wind turbine blades capture kinetic energy of wind using known airfoil principles. Modern wind turbines may have rotor blades that exceed 90 meters in length.

Wind turbine blades are usually manufactured by forming two shell parts or shell halves from layers of woven fabric or fibre and resin. Spar caps or main laminates are placed or integrated in the shell halves and may be combined with shear webs or spar beams to form structural support members. Spar caps or main laminates may be joined to, or integrated within, the inside of the suction and pressure halves of the shell.

As the size of wind turbine blades increases, various challenges arise from such blades being subjected to increased forces during operation, requiring improved reinforcing structures. In some known solutions, pultruded fibrous strips of material are used.

Pultrusion is a continuous process in which fibres are pulled through a supply of liquid resin and then heated in an open chamber where the resin is cured. Such pultruded strips can be cut to any desired length. As such, the pultrusion process is typically characterized by a continuous process that produces composite parts having a constant cross-section. Thus, a plurality of pultrusions can be vacuum infused together in a mould to form the spar caps.

Typically, a spar cap in a wind turbine blade is made from either carbon pultrusions or glass pultrusions. Carbon fibres usually have high electrical conductivity and high stiffness per weight. These properties are desirable in the spar cap of a wind turbine blade. However, drawbacks of carbon fibres include the relatively low strain to failure and the comparatively high price per kg. Glass fibres are typically cheaper and have higher strain to failure. However, the electrical conductivity of glass fibres is minimal and stiffness per weight is significantly lower.

Thus, hybrid pultrusions comprising both glass and carbon fibres also exist. For such hybrid pultrusions, it is desired that the pultrusions are designed with a specific pattern, for example with carbon fibres being sandwiched by glass fibres on all sides. However, with current pultrusion manufacturing processes this is practically impossible. This is partly due to the fact that carbon fibres and glass fibres have different friction and becomes misaligned when they are pulled through a standard pultrusion guiding system e.g. in the step where they are pulled through the pultrusion die and cured.

There is thus an ongoing need for an improved method of manufacturing pultrusions, particularly hybrid pultrusions with an optimized arrangement of materials.

### SUMMARY OF INVENTION

It has been found that one or more of the aforementioned objects can be obtained by providing a method of manufacturing an elongated hybrid pultruded fibre reinforced composite element with a predetermined cross-sectional fibre pattern for a wind turbine blade part, the method comprising the steps of
- providing fibre material, including a plurality of fibres of a first fibre type and a plurality of fibres of a second fibre type, wherein the first fibre type and second fibre type are different from each other;
- pulling the fibre material through a guiding element to arrange the first plurality of fibres and the second plurality of fibres in a pre-determined cross-sectional fibre pattern;
- pre-treating the fibre material by contacting the fibre material with a binding agent and pulling the fibre material through a first pultrusion die to form a plurality of pre-bonded fibre portions;
- passing the pre-bonded fibre portions through a resin bath to impregnate the pre-bonded fibre portions with resin;
- pulling the pre-bonded fibre portions through a second pultrusion die with a pre-determined cross-section to form a cured pultrusion string;
- cutting the pultrusion string to obtain the hybrid pultruded fibre reinforced composite element with the predetermined cross-sectional fibre pattern comprising the plurality of fibres of the first fibre type and the plurality of fibres of the second fibre type.

Particularly the elongated hybrid pultruded fibre reinforced composite elements formed by the method according to the first aspect of the present invention are intended for use in wind turbine blade parts, such as in spar caps, which are often made up of a plurality of elongated pultruded fibre reinforced composite elements i.e. pultrusions. Thus, in preferred embodiments, the wind turbine blade part is a spar cap for a wind turbine blade.

The present inventors have found that the method according to the first aspect of the present invention allows for tailoring the architecture of hybrid pultrusions. This is because the fibres are at least partially joined together by means of the binding agent in the pre-bonded fibre portions which allows retainment of the fibres in the desired pattern when they are pulled through the second pultrusion die. The semi rigid characteristic of the pre-bonded fibre portions prevents the random movement and misalignment of fibres in the second pultrusion die. Hence, the final hybrid pultrusion is manufactured with exact positioning of the individual fibres.

In preferred embodiments, the first fibre type is glass and the second fibre type is carbon.

In preferred embodiments, the ratio of carbon fibre material to glass fibre material in the hybrid pultruded fibre reinforced composite element is between 1/3 to 3/1, such as between 1/3 to 1/1. This has been found to provide optimised properties of the hybrid pultruded fibre reinforced composite element in terms of electrical conductivity and overall stiffness. In some embodiments, the fibre material comprises a plurality of rovings of glass fibre material and a plurality of tows of carbon fibre material. In some embodiments, each tow or roving comprises 10,000 to 100,000 filaments, preferably 20,000 to 60,000 filaments, of glass or carbon fibre.

In some embodiments, the plurality of fibres of the first fibre type and the plurality of fibres of the second fibre type extend substantially parallel to each other within the hybrid pultruded fibre reinforced composite element. In a preferred embodiment, the plurality of fibres of the first fibre type and the plurality of fibres of the second fibre type are arranged in an array, preferably a regular array, of rows and columns of tows, as seen in a vertical cross section of the hybrid pultruded fibre reinforced composite element. The rows will typically extend in a substantially horizontal or chordwise direction, whereas the columns will typically extend in a substantially vertical or flapwise direction. The array of rows and columns of fibres will typically be constant over the length of the elongated hybrid pultruded fibre reinforced composite element.

In some embodiments, the step of providing the fibre material includes providing a plurality of first bobbins each supplying a fibre bundle of the first fibre type and providing a plurality of second bobbins each supplying a fibre bundle of the second fibre type. In some embodiments, the fibre bundles of the first fibre type are rovings of glass fibre provided from a creel and the fibre bundles of the second type are tows of carbon fibre provided from a creel.

In some embodiments, the guiding element is in the form of a spreader or inlet comprising multiple apertures, each aperture configured for receiving a respective fibre bundle of fibre material or a plurality of fibre bundles of fibre material. The apertures can be spaced and they are located so as to guide the fibre tows and rovings to form a desired pattern of fibre material in the hybrid pultruded fibre reinforced composite elements. In that way, the fibre material can be arranged in a desired pattern before it is contacted with the binding agent and pulled through the first pultrusion die.

In some embodiments, the pre-determined cross-sectional fibre pattern is formed from an array of rows and columns of tows of fibre material, as seen from a cross-sectional view through a length-direction of the elongated hybrid pultruded fibre reinforced composite element. The hybrid pultruded fibre reinforced composite element comprises at least 2 rows and at least 10 columns, such as at least 10 rows and at least 10 columns of tows and/or rovings making up the pre-determined cross-sectional fibre pattern.

In a preferred embodiment, the pre-determined cross-sectional fibre pattern is a non-random pattern, preferably a symmetrical pattern, as seen in a vertical cross section of the hybrid pultruded fibre reinforced composite element. In a preferred embodiment, the pattern comprises an I-shaped or a rectangular arrangement of tows of continuous carbon fibre material surrounded by tows of continuous glass fibre material.

In some embodiments, the plurality of pre-bonded fibre portions are rows of fibre material bonded by the binding agent to form pre-bonded fibre layers. This can be achieved by having a guiding element with apertures arranged such that rows of fibres are arranged close to each other and there is a space between each row of fibres. When the fibres are then contacted with the binding agent and pulled through the first pultrusion die in this configuration, the rows of fibres are at least partially joined together by means of the binding agent to form pre-bonded fibre layers.

In some embodiments, the first pultrusion die comprises a plurality of through-going compartments, each compartment configured for pulling a fibre portion contacted with the binding agent through the first pultrusion die.

In some embodiments, the first pultrusion die comprises a heating element for heating the binding agent, when the fibre material is pulled through the first pultrusion die.

In some embodiments, the fibre material is contacted with the binding agent by the binding agent being sprayed onto the fibre material in a powder form.

In some embodiments, the fibre material is contacted with the binding agent by being pulled through a bath comprising a binding agent solution.

In some embodiments, the binding agent is present in an amount of 0.1-15 wt% relative to the weight of the fibre material. In some embodiments, the binding agent is present in an amount of 1-15 wt%, such as 0.5-10 wt%, preferably 0.5-5 wt%, more preferably 0.5-3.5 wt% relative to the weight of the fibre material. According to a particularly preferred embodiment, the binding agent is present in an amount of 1-6 wt% relative to the weight of the fibre material. The binding agent may also comprise two or more different substances, as long as the total binding agent is present in an amount of 0.1-15 wt% relative to the weight of the fibre material.

In some embodiments, the binding agent comprises a polyester, preferably a biphenolic polyester. An example of such binding agent is a polyester marketed under the name NEOXIL 940. Examples include NEOXIL 940 PMX, NEOXIL 940 KS 1 and NEOXIL 940 HF 2B, all manufactured by DSM Composite Resins AG. Preferably, the binding agent is a polyester, preferably a bisphenolic polyester. In other embodiments, the binding agent is a hotmelt adhesive or based on a prepreg resin. In some embodiments, the binding agent comprises vinyl ester or epoxy ester.

In some embodiments, the binding agent is a thermoplastic binding agent having a melting point between 40° and 220 °C, preferably between 40 and 160 °C. In some embodiments, the melting point of the binding agent is between 40° and 220 °C, preferably between 40 and 180 °C, such as between 40 and 170 °C, preferably between 40 and 160 °C.

In some embodiments, the resin in the resin bath is any of: epoxy resin, vinyl ester resin, polyester resin or a thermoplastic resin. In some embodiments, the resin may be any of an epoxy, a polyester, a vinyl ester or another suitable thermoplastic or duroplastic material. In other embodiments, the resin may be a thermosetting resin, such as epoxy, vinyl ester or polyester, or a thermoplastic resin, such as nylon, PVC, ABS, polypropylene or polyethylene. However, the resin may comprise an in-situ polymerisable thermoplastic material. The in-situ polymerisable thermoplastic material may advantageously be selected from the group consisting of pre-polymers of: polybutylene terephthalate (PBT), polyamide-6 (pre-polymer is caprolactam), polyamide-12 (pre-polymer is laurolactam) alloys of polyamide-6 and polyamide-12; polyurethanes (TPU), polymethylmethacrylate (PMMA), polyethylene terephthalate (PET), polycarbonate (PC), polyetheretherketone (PEEK), polyetherketone (PEK), polyethersulfone (PES), polyphenylenesulphide (PPS), polyethylenenaphthalate (PEN) and polybutylenenaphthalate (PBN), cyclic poly(1 ,4-butylene terephthalate) (CBT) and/or combinations thereof.

In some embodiments, the second pultrusion die comprises a heating element for curing the resin, when the pre-bonded fibre portions are pulled through the second pultrusion die.

In some embodiments, the fibre material is pulled through the guiding element, the first pultrusion die, the resin bath and the second pultrusion die by a pulling mechanism. In some embodiments, the pulling mechanism comprises a gripping tool comprising one or more needles and/or pins for at least partially penetrating the fibre material.

In some embodiments, the cured pultrusion string is cut into individual elongated hybrid pultruded fibre reinforced composite elements by a cutting device.

In a second aspect, the present invention relates to an elongated hybrid pre-cured fibre reinforced element for a wind turbine blade, such as a spar cap, obtainable by the method according to the first aspect of the present invention.

In some embodiments, the elongated hybrid pre-cured fibre reinforced element has a length of at least 1 meter and a uniform cross section.

In some embodiments, the hybrid pultruded fibre reinforced composite element has a rectangular cross section. In a preferred embodiment, the hybrid pultruded fibre reinforced composite element has the shape of a rectangular cuboid.

Each hybrid pultruded fibre reinforced composite element comprises a top surface, an opposing bottom surface and two lateral surfaces.

The hybrid pultruded fibre reinforced composite element has a length, which typically extend in a substantially spanwise direction when the hybrid pultruded fibre reinforced composite element is arranged in the blade shell. The hybrid pultruded fibre reinforced composite element also has a width, which typically extends in a substantially chordwise direction when the hybrid pultruded fibre reinforced composite element is arranged in the blade shell. The hybrid pultruded fibre reinforced composite element also has a height or thickness, which typically extends in a substantially flapwise direction when the hybrid pultruded fibre reinforced composite element is arranged in the blade shell. The length of the plate is typically its largest dimension. The length of the plate extends in the same direction as its longitudinal axis.

In some embodiments, the elongated hybrid pre-cured fibre reinforced element has a length of at least 2 meters, more preferably 3 meters, most preferably 4 meters. In some embodiments, the elongated hybrid pre-cured fibre reinforced element has a length of at least 5, 7, 10, 15, 20 or 25 meters. Thus, the length of the elongated hybrid pre-cured fibre reinforced element may range from 1 to 150 meters. The length of the hybrid pultruded fibre reinforced composite element is typically between 50 and 150 meters, preferably between 50 and 100 meters, more preferably between 70 and 100 meters. The height/thickness of the hybrid pultruded fibre reinforced composite element is preferably between 2 and 10 millimeters, preferably between 3 and 7 millimeters, most preferably between 4 and 6 millimeters. The width of the plate is preferably between 20 and 300 millimeters, most preferably between 80 and 150 millimeters.

In some embodiments, at least one continuous path of adjoining tows of carbon fibre material is provided within the hybrid pultruded fibre reinforced composite element, the continuous path of adjoining tows of carbon fibre material extending from the top surface to the opposing bottom surface of the hybrid pultruded fibre reinforced composite element. In a preferred embodiment, a continuous path of adjoining rovings of glass fibre material is provided along the lateral edges of the hybrid pultruded fibre reinforced composite element, the continuous path of adjoining tows of glass fibre material extending from the top surface to the opposing bottom surface of the hybrid pultruded fibre reinforced composite element. Said continuous path of adjoining tows of carbon fibre material is preferably an electrically conducting path.

In a preferred embodiment, a continuous path of adjoining tows of glass fibre material is provided along the lateral edges of the hybrid pultruded fibre reinforced composite element.

In a third aspect, the present invention relates to a spar cap for a wind turbine blade comprising a plurality, such as an array, of elongated hybrid pre-cured fibre reinforced element according to the second aspect of the present invention.

In some embodiments, the array comprises a plurality of adjacent stacks of elongated hybrid pultruded fibre reinforced composite elements. Each stack of hybrid pultruded fibre reinforced composite elements may comprise 2-30, such as 5-20 hybrid pultruded fibre reinforced composite elements successively arranged on top of each other. Each stack will usually be configured to extend in a spanwise direction of a wind turbine blade. In a midsection between a root end and a tip end, each stack may comprise 8-15 layers of hybrid pultruded fibre reinforced composite elements, whereas towards the root end and towards the tip end the number of layered hybrid pultruded fibre reinforced composite elements may decrease to 1-3. Thus, the stack of hybrid pultruded fibre reinforced composite elements is preferably tapered towards both the root end and the distal end. Such configuration advantageously allows for a profile that is consistent with the thickness profile of the wind turbine blade shell. Typically, two or more, or three or more stacks of hybrid pultruded fibre reinforced composite elements are arranged next to each other, adjacent to each other in a substantially chordwise direction. In a preferred embodiment, the spar cap comprises between 1 and 15 stacks of hybrid pultruded fibre reinforced composite elements arranged next to each other, more preferably between 3 and 9 stacks. Typically, a resin will be infused in the stack of hybrid pultruded fibre reinforced composite elements. This can, for example, be done using vacuum-assisted resin transfer moulding.

Preferably, the continuous path of adjoining tows of carbon fibre material extends from the top surface of the uppermost hybrid pultruded fibre reinforced composite element to the bottom surface of the lowermost hybrid pultruded fibre reinforced composite element of each stack of hybrid pultruded fibre reinforced composite elements. Said continuous path of adjoining tows of carbon fibre material within the stack is preferably an electrically conducting path. Thus, the entire stack may conduct a lightning current from the top surface of the stack to the bottom surface of the stack, preferably in a substantially vertical or flapwise direction.

While the top and bottom surface of a hybrid pultruded fibre reinforced composite element is typically covered by peel ply, its lateral edges are typically not. A lateral edge grinding process is usually used to ensure that the resin rich surface on the edges is removed to allow for adhesion of the infusion resin to the pultrusion; otherwise the adhesion between the hybrid pultruded fibre reinforced composite elements and the resin in the blade main spar may not be satisfactory. The inventors have found that bonding of a resin to a ground carbon fibre surface yields low adhesion, whereas, bonding of a resin to a ground glass fibre surface yields better adhesion. Also, it is advantageous if comparatively cheap material and less stiff material is ground off on the edges. Thus, it was found advantageous to place glass fibres along the lateral edges of the hybrid pultruded fibre reinforced composite element. Therefore, in a preferred embodiment no carbon fibre material is present at the respective lateral edges of the hybrid pultruded fibre reinforced composite elements but a continuous path of adjoining tows of glass fibre material is provided along the lateral edges of the hybrid pultruded fibre reinforced composite element.

In a preferred embodiment, the pre-determined cross-sectional pattern is a non-random pattern, preferably a symmetrical pattern, as seen in a vertical cross section of the hybrid pultruded fibre reinforced composite element. Typically, the pattern is constant over the length of the hybrid pultruded fibre reinforced composite element. In one embodiment, the pattern is a checkerboard pattern, for example with alternating glass fibre tows and carbon fibre tows in each column and in each row of the hybrid pultruded fibre reinforced composite element. Such pattern is found to be comparatively easy to manufacture. In another preferred embodiment, the pattern comprises one or more vertical columns of carbon fibre tows extending from the top surface to the bottom surface of the hybrid pultruded fibre reinforced composite element, as seen in a vertical cross section of the hybrid pultruded fibre reinforced composite element. Other embodiments include patterns with various uniform rows of glass fibre tows on top of various uniform rows of carbon fibre tows, and vice versa. It is preferred that the pattern has reflectional symmetry or bilateral symmetry as appearing on the vertical cross section of the hybrid pultruded fibre reinforced composite element, such that the left and right sides are mirror images of each other.

In a particularly preferred embodiment, the pattern comprises an I-shaped arrangement of tows of carbon fibre material surrounded by tows of glass fibre material, as seen in a vertical cross section of the hybrid pultruded fibre reinforced composite element. The term "I-shaped" refers to an arrangement having a first substantially vertical portion, a second substantially horizontal portion substantially perpendicularly coupled to a first end of the first portion, and a third substantially horizontal portion substantially perpendicularly coupled to a second end, i.e. opposite the first end, of the first portion. The second portion extends laterally outward in opposite directions, for example, equidistantly, from the first end of the first portion. The third portion extends laterally outward in opposite directions, for example, equidistantly, from the second end of the first portion. In some embodiments, the pattern comprises more than one I-shaped arrangement, such as two adjacent I-shaped arrangements of tows of carbon fibre material surrounded by tows of glass fibre material, as seen in a vertical cross section of the hybrid pultruded fibre reinforced composite element.

In another preferred embodiment, the pattern comprises a rectangular arrangement of tows of carbon fibre material surrounded by tows of glass fibre material. These patterns are found to provide satisfactory electrical conductivity through the hybrid pultruded fibre reinforced composite element in the vertical direction, i.e. along its height/thickness dimension. In particular, an I-shaped arrangement or a rectangular arrangement of tows of carbon fibre material enables maintaining electrical connection through the thickness of the stack of hybrid pultruded fibre reinforced composite elements even if the stack is not properly aligned. Additional advantages of these patterns include the ease of changing the carbon/glass ratio and improved adhesion along the edges of the plate.

In a preferred embodiment, the hybrid pultruded fibre reinforced composite elements have a length corresponding to an entire length of a spar cap for a wind turbine blade shell.

The spar cap or a main laminate may in alternative embodiments be a box spar, a spar beam. It is preferred that the spar cap extends along the blade in a spanwise direction. Typically, the spar cap will extend over 60-95% of the blade length. The wind turbine blade is usually manufactured from two shell halves, a pressure side shell half and a suction side shell half. Preferably, both shell halves comprise an elongate reinforcing structure, such as a spar cap or a main laminate. In a fourth aspect, the present invention relates to a pultrusion system configured for manufacturing an elongated hybrid pultruded fibre reinforced composite element with a predetermined cross-sectional fibre pattern for a wind turbine blade part, the pultrusion system comprising
- fibre material, including a plurality of fibres of a first fibre type and a plurality of fibres of a second fibre type, wherein the first fibre type and second fibre type are different from each other;
- a guiding element configured for arranging the first plurality of fibres and the second plurality of fibres in a pre-determined cross-sectional fibre pattern by pulling the fibre material from fibre bundles and through the guiding element;
- a binding agent and a binding agent applier, for contacting the fibre material with a binding agent
- a first pultrusion die configured for forming a plurality of pre-bonded fibre portions by pulling the fibre material through the first pultrusion die;
- a resin bath configured for impregnating the pre-bonded fibre portions with resin by passing the pre-bonded fibre portions through the resin bath;
- a second pultrusion die with a pre-determined cross-section configured for forming a cured pultrusion string by pulling the pre-bonded fibre portions through the second pultrusion die;
- a cutting device for cutting the pultrusion string to obtain the elongated hybrid pultruded fibre reinforced composite element with the predetermined cross-sectional fibre pattern comprising the plurality of fibres of the first fibre type and the plurality of fibres of the second fibre type.

In a fifth aspect, the present invention relates to a method of manufacturing a wind turbine blade, said method comprising the steps of
- manufacturing an elongated hybrid pultruded fibre reinforced composite element having a length of at least 1 meter and a uniform cross section, wherein the pultruded fibre reinforced composite element is manufactured using a pultrusion process comprising the steps of
   - providing fibre material, including a first plurality of fibres of a first fibre type and a second plurality of fibres of a second fibre type, wherein the first fibre type and second fibre type are different from each other;
   - pulling the fibre material through a guiding element to arrange the first plurality of fibres and the second plurality of fibres in a pre-determined cross-sectional fibre pattern;
   - pre-treating the fibre material by contacting the fibre material with a binding agent and pulling the fibre material through a first pultrusion die to form a plurality of pre-bonded fibre portions;
   - passing the pre-bonded fibre portions through a resin bath to impregnate the pre-bonded fibre portions with resin;
   - pulling the pre-bonded fibre portions through a second pultrusion die with a pre-determined cross-section to form a cured pultrusion string;
   - cutting the pultrusion string to obtain the hybrid pultruded fibre reinforced composite element with the predetermined cross-sectional fibre pattern comprising the plurality of fibres of the first fibre type and the plurality of the second fibre type,
wherein said method of manufacturing a wind turbine blade further comprises the steps of
- embedding the hybrid pultruded fibre reinforced composite element within one or more parts of the blade,
- infusing a resin into the one or more blade parts containing the hybrid pultruded fibre reinforced composite element and
- optionally assembling the rotor blade including the one or more blade parts.

The step of arranging the hybrid pultruded fibre reinforced composite elements on blade shell material in a mould for the blade shell component preferably comprises arranging the hybrid pultruded fibre reinforced composite elements into adjacent stacks of hybrid pultruded fibre reinforced composite elements, wherein adjacent refers to a substantially chordwise direction. These stacks usually extend in a substantially spanwise direction of the shell half. The step of bonding the hybrid pultruded fibre reinforced composite elements with the blade shell material to form the blade shell component usually comprises a resin infusion step in which the hybrid pultruded fibre reinforced composite elements and the blade shell material are infused with a resin, for example in a VARTM process. The blade shell component is usually a shell half, such as a shell half with a reinforcing structure such as a spar cap. The blade shell material may include one or more fibre layers and/or a gelcoat. The plurality of hybrid pultruded fibre reinforced composite elements will typically extend in a spanwise direction of the shell half or of the blade. Thus, at least some of the hybrid pultruded fibre reinforced composite elements have preferably a length corresponding to 60-95% of the blade length. A polymer resin is typically infused into hybrid pultruded fibre reinforced composite elements following the lay-up into the shell half.

In some embodiments, the stacked hybrid pultruded fibre reinforced composite elements are pre-bonded together prior to being bonded to the blade shell. Alternatively, the stacked hybrid pultruded fibre reinforced composite elements are co-bonded with the blade shell materials. In a preferred embodiment, the stacked hybrid pultruded fibre reinforced composite elements are bonded with the blade shell material using an adhesive or in a vacuum assisted resin transfer moulding (VARTM) process.

In a sixth aspect, the present invention relates to a wind turbine blade obtainable by the method according to the fifth aspect of the present invention.

In some embodiments, the wind turbine blade having a pressure side shell and a suction side shell, wherein the suction and pressure side shells are joined along a leading and trailing edge of the blade. One or both of the suction and pressure side shell components further include a spar cap, such as a spar cap bonded to an interior surface of the shell, wherein the spar cap includes a plurality of hybrid pultruded fibre reinforced composite elements according to the present invention.

All features and embodiments discussed above with respect to the method of manufacturing an elongated hybrid pultruded fibre reinforced composite element likewise apply to the method of manufacturing a wind turbine blade comprising such an elongated hybrid pultruded fibre reinforced composite elements of the present invention and vice versa. Furthermore, all features and embodiments discussed above with respect to the methods described herein likewise apply to the product of the methods i.e. the elongated hybrid pultruded fibre reinforced composite element, the spar cap and the wind turbine blade obtainable by said methods and vice versa.

A "hybrid pultruded fibre reinforced composite element" may also commonly be referred to as a pultrusion or a pultrusion element.

As used herein, the term "pre-determined cross-sectional fibre pattern" refers to fibre pattern as seen from a cross section of the hybrid pultruded fibre reinforced composite element on a plane perpendicular to its longitudinal axis, i.e. through the axis along the length direction of the hybrid pultruded fibre reinforced composite element, which is usually the direction in which the hybrid pultruded fibre reinforced composite element has its greatest extension. When arranged in the blade shell, the longitudinal axis or the length extension of the elongated hybrid pultruded fibre reinforced composite element will usually coincide substantially with a spanwise direction of the blade.

As used herein, the term "spanwise" is used to describe the orientation of a measurement or element along the blade from its root end to its tip end. In some embodiments, spanwise is the direction along the longitudinal axis and longitudinal extent of the wind turbine blade.

As used herein, the term "horizontal" refers to a direction that is substantially parallel to the chord of the blade when the hybrid pultruded fibre reinforced composite elements are arranged in the blade shell. The vertical direction is substantially perpendicular to the horizontal direction, extending in a substantially flapwise direction of the blade.

### BRIEF DESCRIPTION OF THE FIGURES

The invention is explained in detail below with reference to embodiments shown in the drawings, in which
Fig. 1 shows a wind turbine,
Fig. 2 shows a schematic view of a wind turbine blade and a cross-section of a wind turbine blade,
Fig. 3 is a schematic top view of a shell half of a wind turbine blade according to the present invention, a vertical cross section through part of a shell half with a reinforcing structure of the present invention and a pultrusion process for manufacturing the hybrid pultruded fibre reinforced composite elements of the present invention,
Fig. 4 is a schematic vertical cross-sectional view of different embodiments of the hybrid pultruded fibre reinforced composite element of the present invention,
Fig. 5 is a partial vertical cross-sectional view of a reinforcing structure of the present invention, illustrating a possible misalignment of the hybrid pultruded fibre reinforced composite elements, and
Fig. 6 is a schematic illustration of the manufacturing i.e. pultrusion process according to prior art and according to the present invention,
Fig. 7 is a schematic illustration of part of the manufacturing i.e. pultrusion process according to the present invention,
   and
Fig. 8 is a schematic diagram illustrating the different steps of the manufacturing i.e. pultrusion process according to the present invention.

### DETAILED DESCRIPTION OF THE FIGURES

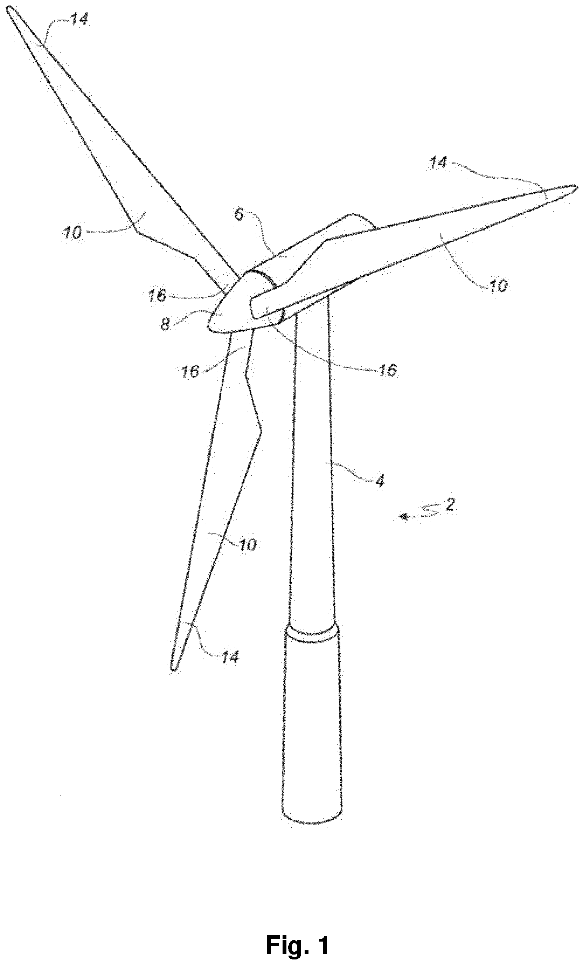

Fig. 1 illustrates a conventional modern upwind wind turbine according to the so-called "Danish concept" with a tower 4, a nacelle 6 and a rotor with a substantially horizontal rotor shaft. The rotor includes a hub 8 and three blades 10 extending radially from the hub 8, each having a blade root 16 nearest the hub and a blade tip 14 farthest from the hub 8. The rotor has a radius denoted R.

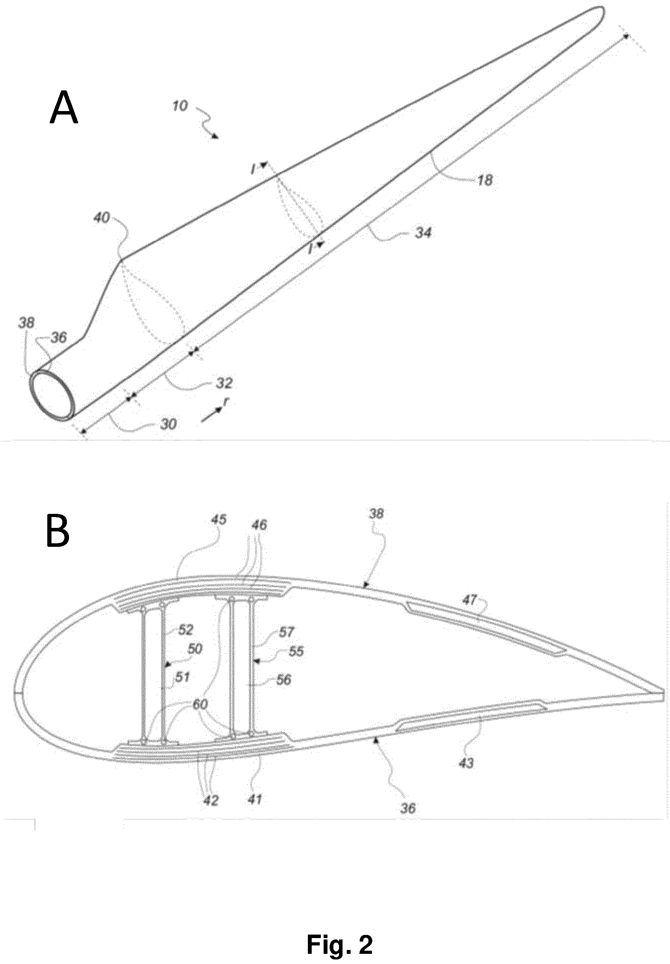

Fig. 2A shows a schematic view of a wind turbine blade 10. The wind turbine blade 10 has the shape of a conventional wind turbine blade and comprises a root region 30 closest to the hub, a profiled or an airfoil region 34 farthest away from the hub and a transition region 32 between the root region 30 and the airfoil region 34. The blade 10 comprises a leading edge 18 facing the direction of rotation of the blade 10, when the blade is mounted on the hub, and a trailing edge 20 facing the opposite direction of the leading edge 18.

The airfoil region 34 (also called the profiled region) has an ideal or almost ideal blade shape with respect to generating lift, whereas the root region 30 due to structural considerations has a substantially circular or elliptical cross-section, which for instance makes it easier and safer to mount the blade 10 to the hub. The diameter (or the chord) of the root region 30 may be constant along the entire root area 30. The transition region 32 has a transitional profile gradually changing from the circular or elliptical shape of the root region 30 to the airfoil profile of the airfoil region 34. The chord length of the transition region 32 typically increases with increasing distance *r* from the hub. The airfoil region 34 has an airfoil profile with a chord extending between the leading edge 18 and the trailing edge 20 of the blade 10. The width of the chord decreases with increasing distance *r* from the hub.

A shoulder 40 of the blade 10 is defined as the position, where the blade 10 has its largest chord length. The shoulder 40 is typically provided at the boundary between the transition region 32 and the airfoil region 34. Fig. 2A also illustrates the longitudinal extent L, length or longitudinal axis of the blade.

It should be noted that the chords of different sections of the blade normally do not lie in a common plane, since the blade may be twisted and/or curved (i.e. pre-bent), thus providing the chord plane with a correspondingly twisted and/or curved course, this being most often the case in order to compensate for the local velocity of the blade being dependent on the radius from the hub.

The blade is typically made from a pressure side shell part 36 and a suction side shell part 38 that are glued to each other along bond lines at the leading edge 18 and the trailing edge of the blade 20.

Fig. 2B shows a schematic view of a cross section of the blade along the line I-I shown in Fig. 2A. As previously mentioned, the blade 10 comprises a pressure side shell part 36 and a suction side shell part 38. The pressure side shell part 36 comprises a spar cap 41, also called a main laminate, which constitutes a load bearing part of the pressure side shell part 36. The suction side shell part 38 also comprises a spar cap 45. The pressure side shell part 36 may also comprise a sandwich core material 43 typically made of balsawood or foamed polymer and sandwiched between a number of fibre reinforced skin layers. The sandwich core material 43 is used to provide stiffness to the shell in order to ensure that the shell substantially maintains its aerodynamic profile during rotation of the blade. Similarly, the suction side shell part 38 may also comprise a sandwich core material 47.

The spar cap 41 of the pressure side shell part 36 and the spar cap 45 of the suction side shell part 38 are connected via a first shear web 50 and a second shear web 55. The shear webs 50, 55 are in the shown embodiment shaped as substantially I-shaped webs. The first shear web 50 comprises a shear web body and two web foot flanges. The shear web body comprises a sandwich core material 51, such as balsawood or foamed polymer, covered by a number of skin layers 52 made of a number of fibre layers. The blade shells 36, 38 may comprise further fibre-reinforcement at the leading edge and the trailing edge. Typically, the shell parts 36, 38 are bonded to each other via glue flanges.

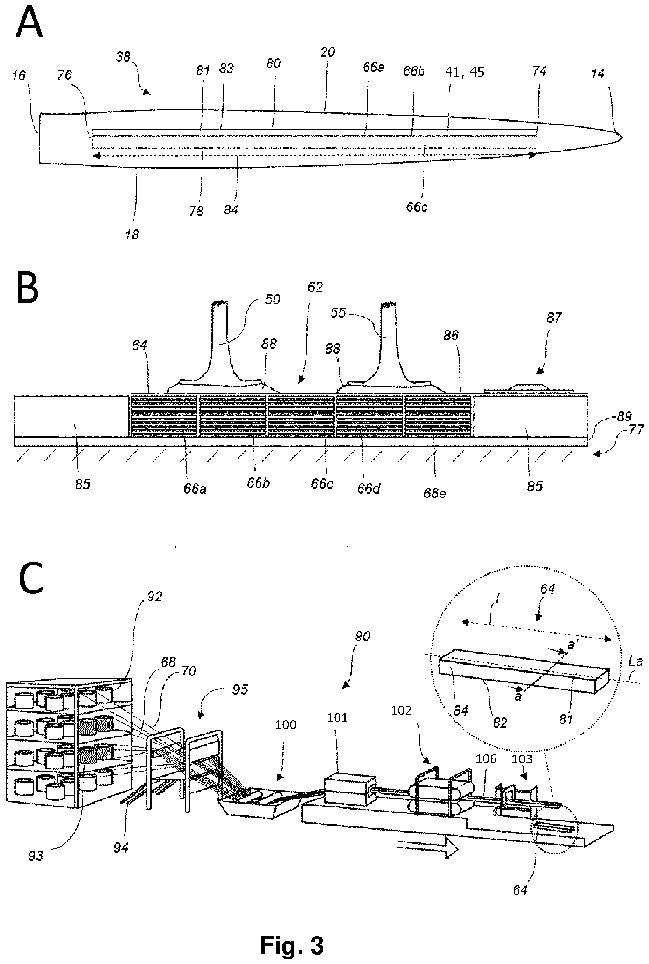

Fig. 3A is a schematic top view of a shell half 38 of a wind turbine blade, illustrating the location of a spar cap 41, 45 having a spanwise extent. In the illustrated embodiment, the spar cap 41, 45 comprises three adjacent stacks 66a, 66b, 66c of elongated pultruded fibre reinforced composite elements. As seen in Fig. 3A, the elongate spar cap 41, 45 extends in a substantially spanwise direction of the blade, with adjacent stacks 66a, 66b, 66c of elongated pultruded fibre reinforced composite elements. The elongate spar cap 41, 45 has a tip end 74, closest to the tip end of the blade, and a root end 76, closest to the root end of the blade. The elongate spar cap also comprises a spanwise extending front edge 78, which is closest to the leading edge 18 of the blade, and a spanwise extending rear edge 80, which is closest to the trailing edge 20 of the blade.

Fig. 3B is a schematic vertical cross section through part of a shell half with a spar cap 41,45 as seen from the root end of the blade. The spar cap 41,45 comprises a plurality of pultruded fibre reinforced composite elements 64 arranged in adjacent stacks 66a-e, which are arranged on blade shell material 89 in mould 77 for the blade shell component, such as a shell half. The stacked pultruded fibre reinforced composite elements 64 are bonded with the blade shell material 89 to form the blade shell component, such as the shell half with the spar cap. Core material 85 is arranged on either chordwise side of the spar cap 41,45. A first shear web 50 and a second shear web 55 is placed on the spar cap 41,45 via respective bond lines 88. The stacks 66a-e may be covered by a carbon biax layer 86 or a carbon veil or a glass/carbon hybrid fabric or a glass/carbon hybrid veil extending towards current connection terminal 87 of a lightning protection system.

Fig. 3C illustrates a conventional pultrusion system 90 for manufacturing a pultruded fibre reinforced composite elements 64 via a pultrusion process.

The pultrusion system 90 comprises a portion for receiving a plurality of bobbins 92, 93 each supplying a fibre bundle. The pultrusion system 90 further comprises a guiding element 95, a resin bath 100, a second pultrusion die 101, a pulling mechanism 102 and a cutting device 103.

For manufacturing a pultruded fibre reinforced composite element 64, the fibre material 68, 70 provided by the bobbins 92, 93 are pulled through the pultrusion system i.e. through the guiding element 95, the resin bath 100, and the second pultrusion die 101 by the pulling mechanism 103 to form a cured pultrusion string 106 before it is cut to a desired size by the cutting device 103.

When manufacturing hybrid pultruded fibre reinforced composite elements 64, the system comprises first bobbins 92 each supplying a fibre bundle of the first fibre type 70 and providing a plurality of second bobbins 93 each supplying a fibre bundle of the second fibre type 68.

The guiding element 95 may be in the form of a spreader or inlet comprising multiple apertures 96, each aperture 96 configured for receiving a respective fibre bundle of fibre material 68, 70. The apertures 96 can be spaced and they are located so as to guide the fibres to form a desired pattern of fibres in the pultruded fibre reinforced composite elements 64.

The resin bath 100 is for impregnating the fibre material 68, 70. The second pultrusion die 101 is for forming a pultrusion string 106. The second pultrusion die 101 may comprise one or more heating elements for curing the resin, when the fibres are pulled through the second pultrusion die 101. Then the fibre material is cut into individual hybrid pultruded fibre reinforced composite elements 64 by a cutting device 103.

The enlarged view of the pultruded fibre reinforced composite element 64 in Fig. 3C illustrates its longitudinal axis La and its length I.

The problem with a conventional pultrusion system as illustrated in fig. 3C is that when manufacturing hybrid pultruded fibre reinforced composite elements 64, it is desired that the pultruded fibre reinforced composite elements 64 are designed with a specific pattern i.e a pre-determined cross sectional fibre pattern, for example with carbon fibres being sandwiched by glass fibres on all sides. However, with current pultrusion manufacturing processes this is practically impossible. This is partly due to the fact that carbon fibres and glass fibres have different friction and becomes misaligned when they are pulled through a standard pultrusion guiding system e.g. in the step where they are pulled through the second pultrusion die 101 and cured.

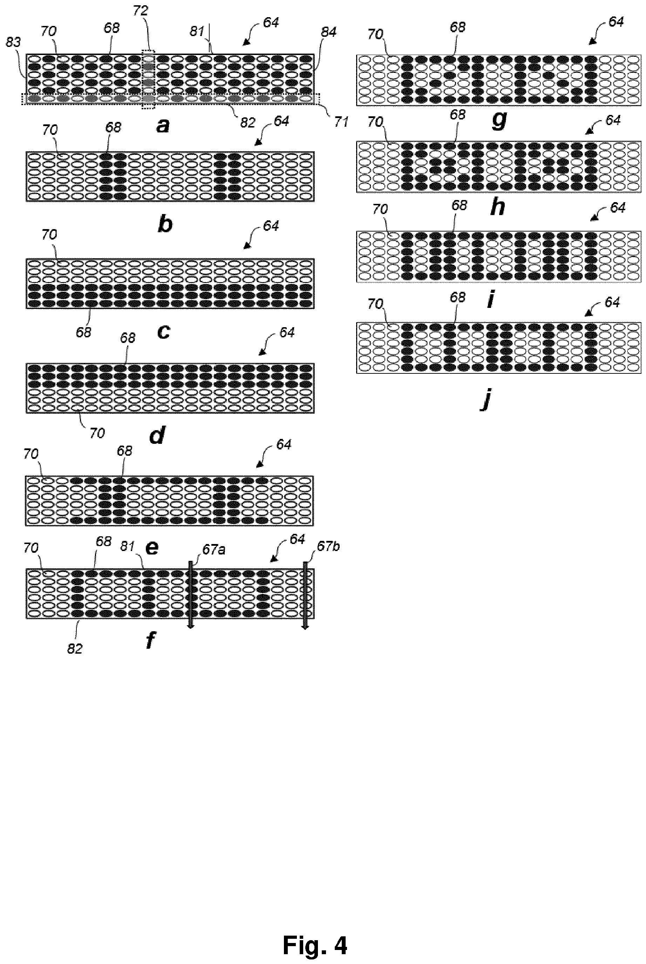

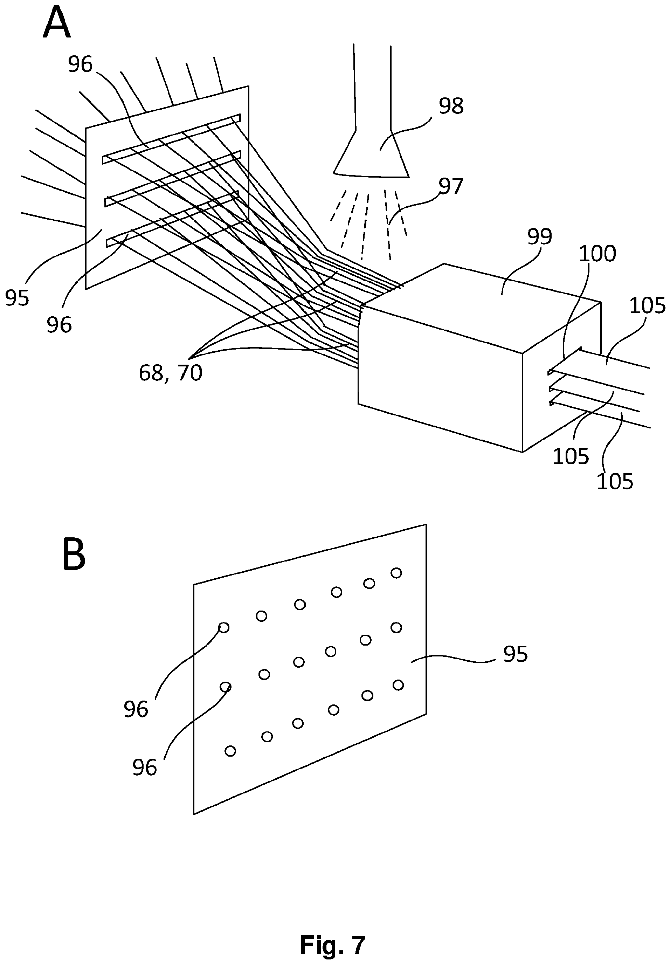

Fig. 4 illustrates a cross sectional view of different desired embodiments of hybrid pultruded fibre reinforced composite elements 64 taken along the line a-a' of Fig. 3C. Each pultruded fibre reinforced composite element 64 in the various embodiments illustrated in Figs. 7a-j comprises fibre material including a plurality of fibres of a first type 70 e.g. glass, indicated as white elliptical shapes, and a plurality of fibres of a second fibre type 68 e.g. carbon, indicated as black elliptical shapes.

As illustrated in Fig. 4, the fibre material is arranged in an array of rows 71 and columns 72, as seen in a cross section of the pultruded fibre reinforced composite element. This array is the pre-determined cross-sectional fibre pattern of a pultruded fibre reinforced composite element i.e. the fibre pattern as seen from a cross section of the hybrid pultruded fibre reinforced composite element on a plane perpendicular to its longitudinal axis, i.e. the axis along the length direction of the hybrid pultruded fibre reinforced composite element, which is usually the direction in which the hybrid pultruded fibre reinforced composite element has its greatest extension. When arranged in the blade shell, the longitudinal axis or the length extension of the hybrid pultruded fibre reinforced composite element will usually coincide substantially with a spanwise direction of the blade.

As illustrated in Fig. 4a, each pultruded fibre reinforced composite element comprises a top surface 81, an opposing bottom surface 82 and two lateral surfaces 83, 84, wherein preferably at least one continuous path 67a of adjoining carbon fibres is provided within the pultruded fibre reinforced composite element 64; see Fig. 4f. The continuous path 67a of adjoining carbon fibres extends from the top surface 81 to the opposing bottom surface 82 of the pultruded fibre reinforced composite element 64. In some embodiments, as shown in the pre-determined cross-sectional fibre pattern of Fig. 4a, said path of adjoining tows of carbon fibres may be a diagonal path extending from the top surface 81 to the opposing bottom surface 82 of the pultruded fibre reinforced composite element. Also, in some embodiments, a continuous path 67b of glass fibres is provided along the lateral edges 83, 84 of the pultruded fibre reinforced composite element 64, the continuous path 67b of adjoining glass fibres extending from the top surface 81 to the opposing bottom surface 82 of the pultruded fibre reinforced composite element; as exemplified in Fig. 4f.

As seen in the various embodiments of Fig. 4, the first plurality of fibres 70 and the second plurality of fibres 68 form a non-random pattern, preferably a symmetrical pattern, as seen in a cross-sectional view of the pultruded fibre reinforced composite element 64. Fig. 4a illustrates a checkerboard pattern, Fig. 4b illustrates a pattern with two vertical lines of a second plurality of fibres comprising the second fibre type surrounded by a first plurality of fibres comprising fibres of the first fibre type, and Figs. 4c and d illustrated various uniform rows of a first plurality of fibres comprising fibres of the first fibre type on top of various uniform rows of a second plurality of fibres comprising fibres of the second fibre type, and vice versa. Fig. 4e illustrates a pre-determined cross-sectional fibre pattern that comprises two adjacent I-shaped arrangements of a second plurality of fibres surrounded by a first plurality of fibres, whereas Fig. 4f-j show different patterns with rectangular arrangements of the second plurality of fibres.

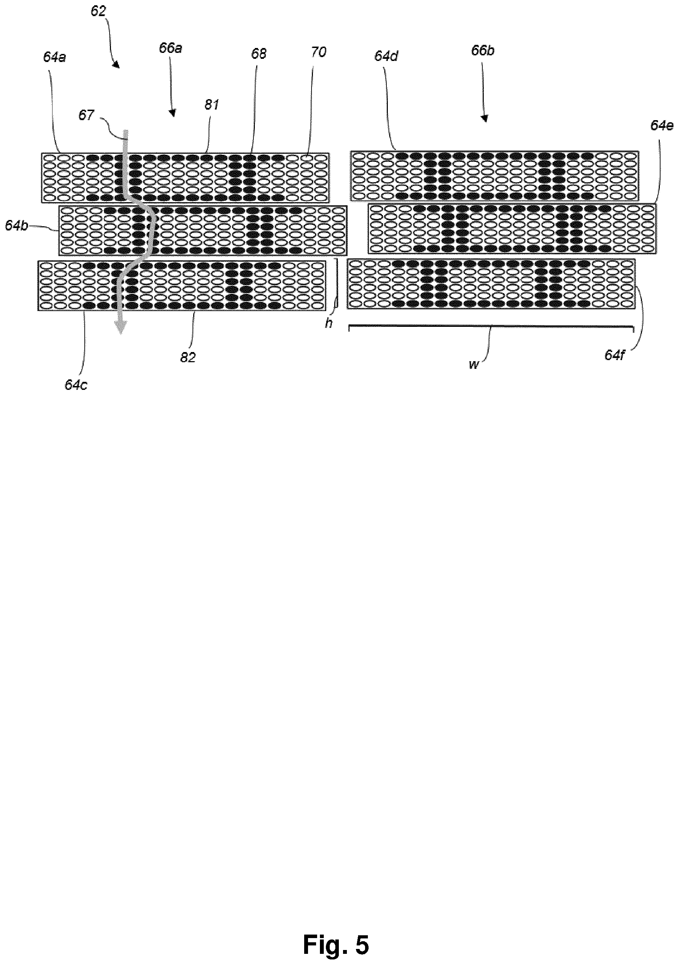

Fig. 5 is a schematic cross-sectional view through the length of a spar cap comprising two chordwise adjacent stacks 66a and 66b of pultruded fibre reinforced composite elements 64a-f. Fig. 5 also illustrates a possible misalignment of the pultruded fibre reinforced composite elements 64a-f. Despite the misalignment caused by relative chordwise movement of the pultruded fibre reinforced composite elements 64, a continuous path 67 of adjoining carbon fibres 68 extends from the top surface 81 of the uppermost pultruded fibre reinforced composite element 64a to the bottom surface 82 of the lowermost pultruded fibre reinforced composite element 64c of each stack of pultruded fibre reinforced composite elements due to the arrangement of the first and second plurality of fibres in a fitting pre-determined cross-sectional fibre pattern.

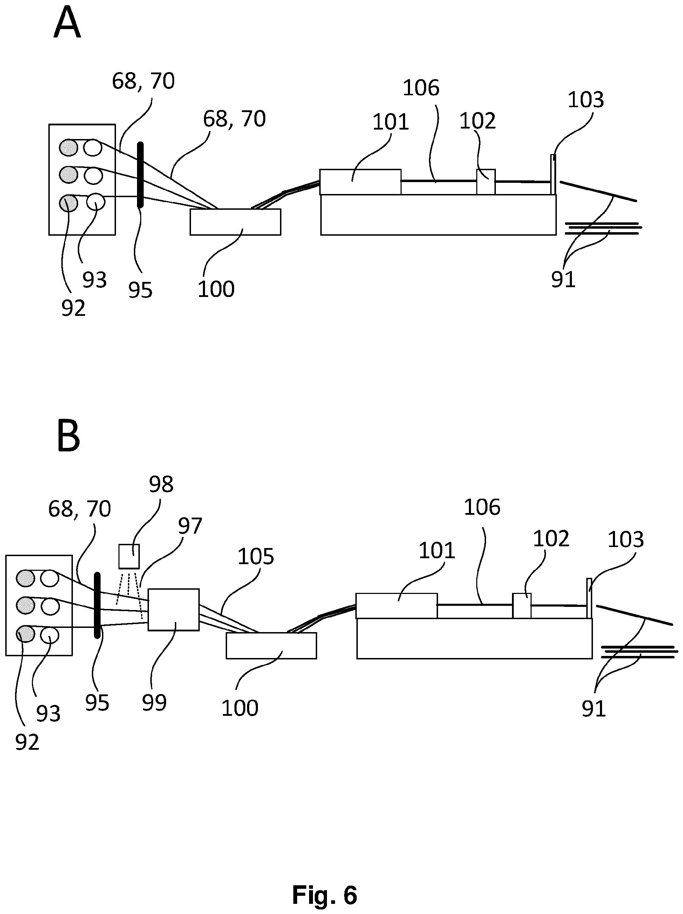

Fig. 6A is a simple schematic side-view illustration of the pultrusion system shown in Fig. 3C. i.e. a system for manufacturing an elongated hybrid pultruded fibre reinforced composite element.

Fig. 6B is a simple schematic side-view illustration of an embodiment of a manufacturing process i.e. a pultrusion process according to the present invention.

Similar to the conventional pultrusion system illustrated in fig. 3C and 6A, the pultrusion system according to the present invention comprises fibre material of a first and second fibre type e.g. glass and carbon, provided by a plurality of bobbins 92, 93. Furthermore, the system comprises a guiding element 95, a resin bath 100, a second pultrusion die 101, a pulling mechanism 102 and a cutting device 103. However, in addition to the setup in fig. 3C and 6A, the pultrusion system according to the present invention further comprises a section for pre-treating the fibre material 68, 70 before it is pulled through the resin bath 100. The pre-treatment comprises contacting the fibre material 68, 70 with binding agent 97 and pulling it through a first pultrusion die 99 to form pre-bonded fibre portions 105. In that way, the fibres are at least partially joined together by means of the binding agent 97 in the pre-bonded fibre portions 105 which allows retainment of the fibres in the desired pre-determined fibre pattern when they are pulled through the second pultrusion die 101. This is because the semi rigid characteristic of the pre-bonded fibre portions 105 prevents the random movement and misalignment of fibres in the second pultrusion die. Hence, the final hybrid pultruded fibre reinforced elements 64 are manufactured with exact positioning of the individual fibres and allows for tailoring the architecture of the hybrid pultruded fibre reinforced elements 64.

The binding agent 97 is applied to the fibre material 68, 70 by a binding agent applier 98, such as a spray gun or a container containing a binding agent solution through which the fibre material can be pulled. The binding agent 97 may be present in an amount of 0.1-15 wt% relative to the weight of the fibre material. The binding agent may comprise a polyester, preferably a biphenolic polyester. The binding agent 97 may be a thermoplastic binding agent having a melting point between 40° and 220 °C, preferably between 40 and 160 °C. The fibre material 68, 70 may be contacted with the binding agent 97 by the binding agent 97 being sprayed onto the fibre material 68, 70 in a powder form or by the fibre material 68, 70 being pulled through a bath comprising a binding agent solution.

The first pultrusion die 99 is configured for pulling the fibre material 68, 70 through, to form a plurality of pre-bonded fibre portions 105. The first pultrusion die 99 may comprise one or more heating elements for heating the binding agent, when the fibre material is pulled through the first pultrusion die 99. The plurality of pre-bonded fibre portions 105 may be rows i.e. pre-bonded layers of fibre material 68, 70 bonded by the binding agent 97 to form pre-bonded fibre layers. In that way, the plurality of fibres of the first and second type will not move relative to each other when pulled through the second pultrusion die 101.

Fig. 7A is a schematic illustration of the pre-treatment section of the pultrusion system according to an embodiment of the present invention.

The guiding element 95 is in the form of a spreader or inlet comprising three apertures 96, each aperture 96 configured for receiving a plurality of fibre bundles of fibre material 68, 70 through the apertures 96.

In fig. 7A, the first pultrusion die 99 comprises three through-going compartments 100, each compartment configured for pulling fibre material contacted with binding agent 97 through the first pultrusion die. In fig. 7A, these compartments are configured for providing pre-bonded fibre layers. When such fibre layers subsequently are pulled through the resin bath 100 and the second pultrusion die 101, the pre-determined fibre pattern 94 will be maintained, since the fibres along the rows in the pre-determined fibre pattern 94 are pre-bonded i.e. does not move relative to each other when pulled through the second pultrusion die 101.

Fig. 7B shows an alternative guiding element 95 in the form of a spreader or inlet comprising multiple apertures 96 i.e. three rows with six apertures in each row. Each aperture is configured for receiving a respective fibre bundle of fibre material.

It should be notes that many other configurations of the guiding element 95 and apertures 96 can be used. The important thing is that the fibre material 68, 70, when pulled through the guiding element 95 are arranged in a pre-determined fibre pattern 94 which can be contacted with binding agent 97 and pulled through the first pultrusion die 99 to form pre-bonded portions 105. In that way, a high-quality hybrid pultrusion with a pre-determined fibre pattern 94 can be formed.

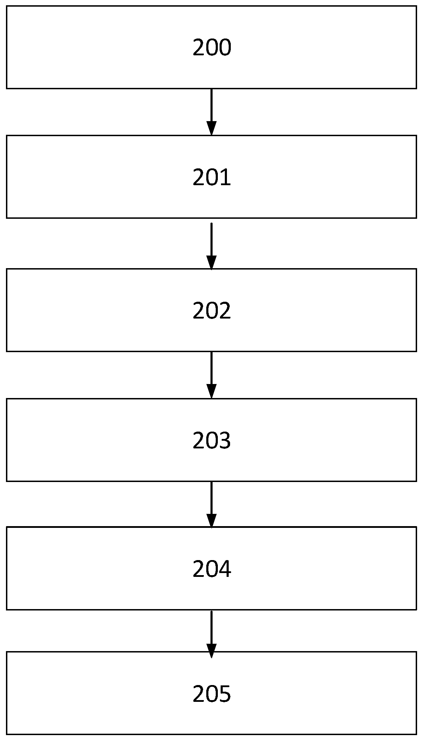

Fig. 8 is a schematic diagram illustrating the different steps of the method of manufacturing an elongated hybrid pultruded fibre reinforced composite element 64 with a predetermined cross-sectional fibre pattern 94 for a wind turbine blade part according to the present invention.

The method comprises a first step 200 of providing fibre material 68, 70, including a first plurality of fibres of a first fibre type 68 and a second plurality of fibres of a second fibre type 70, wherein the first fibre type and second fibre type are different from each other e.g. carbon and glass fibres.

The fibre material may be provided by a plurality of first bobbins 92 each supplying a fibre bundle of the first fibre type 70 and providing a plurality of second bobbins 93 each supplying a fibre bundle of the second fibre type 68.

The method further comprises a second step 201 subsequent to the first step 200. The second step 201 comprises pulling the fibre material 68, 70 through a guiding element 95 to arrange the plurality of fibres of the first and second type 68, 70 in a pre-determined cross-sectional fibre pattern 94.

The guiding element 95 may be in the form of a spreader or inlet comprising multiple apertures 96, each aperture 96 configured for receiving a respective fibre bundle of fibre material 68, 70 or a plurality of fibre bundles of fibre material 68, 701.

The pre-determined fibre pattern 94 is formed as an array of rows 71 and columns 72 of fibre material, as seen from a cross sectional view through the hybrid pultruded fibre reinforced composite element 64.

The method further comprises a third step 202 subsequent to the second step 201. The third step 202 comprises pre-treating the fibre material 68, 70 by contacting the fibre material 68, 70 with a binding agent 97 and pulling the fibre material 68, 70 through a first pultrusion die 99 to form a plurality of pre-bonded fibre portions 105. The plurality of pre-bonded fibre portions 105 may be rows i.e. pre-bonded layers of fibre material 68, 70 bonded by the binding agent 97 to form pre-bonded fibre layers 105.

The first pultrusion die 99 may comprise one or more heating elements for heating the binding agent, when the fibre material is pulled through the first pultrusion die.

The first pultrusion die may also comprise a plurality of through-going compartments 100, each compartment configured for pulling a fibre portion contacted with binding agent 97 through the first pultrusion die 99.

The method further comprises a fourth step 203 subsequent to the third step 202. The fourth step comprises passing the pre-bonded fibre portions 105 through a resin bath 100 to impregnate the pre-bonded fibre portions 105 with resin.

The binding agent 97 may be present in an amount of 0.1-15 wt% relative to the weight of the fibre material. The binding agent 97 may comprise a polyester, preferably a biphenolic polyester. The binding agent 97 may be a thermoplastic binding agent having a melting point between 40° and 220 °C, preferably between 40 and 160 °C.

The fibre material 68, 70 may be contacted with the binding agent 97 by the binding agent 97 being sprayed onto the fibre material 68, 70 in a powder form or as a solution or by the fibre material 68, 70 being pulled through a bath comprising a binding agent solution or a powder.

The method further comprises a fifth step 204 subsequent to the fourth step 203. The fifth step 204 comprises pulling the pre-bonded fibre portions 105 through a second pultrusion die 101 with a pre-determined cross-section to form a cured pultrusion string 106.

The second pultrusion die 101 may comprise one or more heating elements for curing the resin, when the pre-bonded fibre portions 105 are pulled through the second pultrusion die 101.

The resin may be any of: epoxy resin, vinyl ester resin, polyester resin or a thermoplastic resin.

The method further comprises a sixth step 205 subsequent to the fifth step 204. The fifth step 205 comprises cutting the cured pultrusion string 106 to obtain the hybrid pultruded fibre reinforced composite element 64 with the predetermined cross-sectional fibre pattern 94 comprising the plurality of fibres of the first fibre type 68 and the plurality of the second fibre type 70.

The cured pultrusion string 106 is cut into individual pultruded fibre reinforced composite elements 64 by a cutting device 103.

The fibre material 68, 70 is pulled through the pultrusion system i.e. through the guiding element 95, the first pultrusion die 99, the resin bath 100 and the second pultrusion die 101 by a pulling mechanism 102.

The invention is not limited to the embodiments described herein and may be modified or adapted without departing from the scope of the present invention.

### LIST OF REFERENCE SIGNS USED

- 4: tower
- 6: nacelle
- 8: hub
- 10: wind turbine blade
- 14: blade tip
- 16: blade root
- 18: leading edge
- 20: trailing edge
- 30: root region
- 32: transition region
- 34: airfoil region
- 36: pressure side shell part
- 38: suction side shell part
- 40: shoulder
- 41: spar cap
- 42: fibre layers
- 43: sandwich core material
- 45: spar cap
- 46: fibre layers
- 47: sandwich core material
- 50: first shear web
- 51: core member
- 52: skin layers
- 55: second shear web
- 56: sandwich core material of second shear web
- 57: skin layers of second shear web
- 60: filler ropes
- 64: pultruded fibre reinforced composite element
- 66: stack of pultruded fibre reinforced composite elements
- 67: path
- 68: tow of carbon fibre material
- 70: roving of glass fibre material
- 71: row of tows
- 72: column of tows
- 74: tip end of spar cap
- 76: root end of spar cap
- 77: mould
- 78: front edge of spar cap
- 80: rear edge of spar cap
- 81: top surface of hybrid pultruded fibre reinforced composite element
- 82: bottom surface of hybrid pultruded fibre reinforced composite element
- 83: first lateral surface of hybrid pultruded fibre reinforced composite element
- 84: second lateral surface of hybrid pultruded fibre reinforced composite element
- 85: core material
- 86: carbon biax layer
- 87: current connection terminal
- 88: bond line
- 89: shell material
- 90: pultrusion system
- 91: elongated hybrid pultruded fibre reinforced composite element i.e. pultrusion
- 92: first bobbin comprising plurality of fibres of a first fibre type
- 93: second bobbin comprising plurality of fibres of a second fibre type
- 94: pre-determined cross sectional fibre pattern
- 95: guiding element
- 96: apertures
- 97: binding agent
- 98: binding agent applier
- 99: first pultrusion die
- 100: through-going compartments
- 100: resin bath
- 101: second pultrusion die
- 102: pulling mechanism
- 103: cutting device
- 105: pre-bonded fibre portions
- 106: cured pultrusion string
- 200: first step
- 201: second step
- 202: third step
- 203: fourth step
- 204: fifth step
- 205: sixth step
- L: length
- I: length of hybrid pultruded fibre reinforced composite element
- w: width of hybrid pultruded fibre reinforced composite element
- h: height of hybrid pultruded fibre reinforced composite element
- La: longitudinal axis of hybrid pultruded fibre reinforced composite element
- r: distance from hub
- R: rotor radius
- Se: spanwise extent of spar cap
- Ce: chordwise extent of spar cap

## Claims

1. A method of manufacturing an elongated hybrid pultruded fibre reinforced composite element with a predetermined cross-sectional fibre pattern for a wind turbine blade part, the method comprising the steps of
- providing fibre material, including a plurality of fibres of a first fibre type and a plurality of fibres of a second fibre type, wherein the first fibre type and second fibre type are different from each other;
- pulling the fibre material through a guiding element to arrange the first plurality of fibres and the second plurality of fibres in a pre-determined cross-sectional fibre pattern;
- pre-treating the fibre material by contacting the fibre material with a binding agent and pulling the fibre material through a first pultrusion die to form a plurality of pre-bonded fibre portions;
- passing the pre-bonded fibre portions through a resin bath to impregnate the pre-bonded fibre portions with resin;
- pulling the pre-bonded fibre portions through a second pultrusion die with a pre-determined cross-section to form a cured pultrusion string;
- cutting the pultrusion string to obtain the hybrid pultruded fibre reinforced composite element with the predetermined cross-sectional fibre pattern comprising the plurality of fibres of the first fibre type and the plurality of fibres of the second fibre type.

2. A method according to claim 1, wherein the first fibre type is glass and the second fibre type is carbon.

3. A method according to any of the preceding claims, wherein providing the fibre material includes providing a plurality of first bobbins each supplying a fibre bundle of the first fibre type and providing a plurality of second bobbins each supplying a fibre bundle of the second fibre type.

4. A method according to any of the preceding claims, wherein the guiding element is in the form of a spreader or inlet comprising multiple apertures, each aperture configured for receiving a respective fibre bundle of fibre material or a plurality of fibre bundles of fibre material and wherein the pre-determined fibre pattern is formed as an array of rows and columns of tows of fibre material, as seen in a cross section of the hybrid pultruded fibre reinforced composite element.

5. A method according to any of the preceding claims, wherein the plurality of pre-bonded fibre portions are rows of fibre material bonded by the binding agent to form pre-bonded fibre layers.

6. A method according to any of the preceding claims, wherein the first pultrusion die comprises a heating element for heating the binding agent, when the fibre material is pulled through the first pultrusion die and wherein the second pultrusion die comprises a heating element for curing the resin, when the pre-bonded fibre portions are pulled through the second pultrusion die.

7. A method according to any of the preceding claims, wherein the first pultrusion die comprises a plurality of through-going compartments, each compartment configured for pulling a fibre portion contacted with binding agent through the first pultrusion die.

8. A method according to any of the preceding claims wherein the binding agent is present in an amount of 0.1-15 wt% relative to the weight of the fibre material and/or wherein the binding agent comprises a polyester, preferably a biphenolic polyester and/or wherein the binding agent is a thermoplastic binding agent having a melting point between 40° and 220 °C, preferably between 40 and 160 °C.

9. A method according to any of the preceding claims, wherein the fibre material is contacted with the binding agent by the binding agent being sprayed onto the fibre material in a powder form or wherein the fibre material is contacted with the binding agent by being pulled through a bath comprising a binding agent solution.

10. A method according to any of the preceding claims, wherein the resin in the resin bath is any of: epoxy resin, vinyl ester resin, polyester resin or a thermoplastic resin.

11. A method according to any of the preceding claims, wherein the fibre material is pulled through the guiding element, the first pultrusion die, the resin bath and the second pultrusion die by a pulling mechanism and wherein the cured pultrusion string is cut into individual pultruded fibre reinforced composite elements by a cutting device.

12. An elongated hybrid pultruded fibre reinforced composite element for a wind turbine blade part, such as a spar cap, obtainable by the method of any of claim 1-13.

13. A spar cap comprising a plurality of elongated hybrid pultruded fibre reinforced composite elements according to claim 14.

14. A method of manufacturing a wind turbine blade, said method comprising the step of manufacturing an elongated hybrid pultruded fibre reinforced composite element having a length of at least 1 meter and a uniform cross section, wherein the pultruded fibre reinforced composite element is manufactured using a pultrusion process comprising the steps of
- providing fibre material, including a plurality of fibres of a first fibre type and a plurality of fibres of a second fibre type, wherein the first fibre type and second fibre type are different from each other;
- pulling the fibre material through a guiding element to arrange the first plurality of fibres and the second plurality of fibres in a pre-determined cross-sectional fibre pattern;
- pre-treating the fibre material by contacting the fibre material with a binding agent and pulling the fibre material through a first pultrusion die to form a plurality of pre-bonded fibre portions;
- passing the pre-bonded fibre portions through a resin bath to impregnate the pre-bonded fibre portions with resin;
- pulling the pre-bonded fibre portions through a second pultrusion die with a pre-determined cross-section to form a cured pultrusion string;
- cutting the pultrusion string to obtain the hybrid pultruded fibre reinforced composite element with the predetermined cross-sectional fibre pattern comprising the plurality of fibres of the first fibre type and the plurality of fibres of the second fibre type.
wherein said method of manufacturing a wind turbine blade further comprises the steps of
- embedding the hybrid pultruded fibre reinforced composite element within one or more parts of the blade,
- infusing a resin into the one or more blade parts containing the hybrid pultruded fibre reinforced composite element and
- optionally assembling the rotor blade including the one or more blade parts.

15. A system configured for manufacturing an elongated hybrid pultruded fibre reinforced composite element with a predetermined cross-sectional fibre pattern for a wind turbine blade part, the system comprising
- fibre material, including a plurality of fibres of a first fibre type and a plurality of fibres of a second fibre type, wherein the first fibre type and second fibre type are different from each other;
- a guiding element comprising a plurality of apertures configured for arranging the first plurality of fibres and the second plurality of fibres in a pre-determined cross-sectional fibre pattern by pulling the fibre material from fibre bundles and through the guiding element;
- a binding agent and a binding agent applier, for contacting the fibre material with a binding agent
- a first pultrusion die configured for forming a plurality of pre-bonded fibre portions by pulling the fibre material through the first pultrusion die;
- a resin bath configured for impregnating the pre-bonded fibre portions with resin by passing the pre-bonded fibre portions through the resin bath;
- a second pultrusion die with a pre-determined cross-section configured for forming a cured pultrusion string by pulling the pre-bonded fibre portions through the second pultrusion die;
- a cutting device for cutting the pultrusion string to obtain the hybrid pultruded fibre reinforced composite element with the predetermined cross-sectional fibre pattern comprising the plurality of fibres of the first fibre type and the plurality of fibres of the second fibre type.
